# EUROPEAN PATENT SPECIFICATION

(11) **EP 3 180 293 B1**
(45) Date of publication and mention of the grant of the patent: **20.01.2021**
(21) Application number: 14755312.7
(22) Date of filing: 13.08.2014
(51) Int. Cl.: C03B 37/012, C03B 37/027, C03B 23/207

(54) **METHOD FOR FORMING A QUARTZ GLASS OPTICAL COMPONENT AND SYSTEM**
VERFAHREN ZUR HERSTELLUNG EINER OPTISCHEN KOMPONENTE AUS QUARZGLAS SOWIE ANLAGE
PROCÉDÉ POUR LA FORMATION D'UN COMPOSANT OPTIQUE EN VERRE DE QUARTZ ET SYSTÈME

(43) Date of publication of application: 21.06.2017
(73) Proprietor: Heraeus Quartz North America LLC, Buford, GA 30518 (US)
(72) Inventor: CHANG, Kai, Decatur, GA 30030 (US); FATTAL, Georges, Levon, Suwanee, GA 30024 (US); MA, Qiulin, Duluth, GA 30097 (US)
(74) Representative: Staudt, Armin Walter
(86) International application number: PCT/US2014/050868
(87) International publication number: WO 2016/024965

(56) References cited:
- CN-A- 102 285 758
- JP-A- H1 087 338
- JP-A- H05 279 069
- JP-A- S63 231 405
- JP-A- 2000 063 140
- JP-A- 2000 256 028
- JP-A- 2001 039 721
- JP-A- 2003 300 737
- JP-A- 2003 300 749
- JP-A- 2004 175 647
- US-A- 4 195 980
- US-A1- 2013 333 421
- US-A1- 2014 020 430

## Description

### TECHNICAL FIELD

The invention relates to a system and method for producing an optical component of quartz glass, particularly for waveguide or optical fiber applications, while reducing waveguide distortions and ensuring uniform temperature and viscosity distribution throughout the quartz glass in its thermal processes. Such thermal processes include, but are not limited to, preform or fiber drawing, stretching, compressing, collapsing, or overcladding.

### BACKGROUND

Examples of quartz glass optical component include, for example, a solid or hollow cylinder, a preform for optical fibers, or an optical fiber. Such optical components are typically formed using a coaxial arrangement of a quartz glass core rod inserted within the bore of a quartz glass overclad cylinder. Starting with its lower end, the coaxial arrangement is supplied to the heating zone of a vertically-oriented draw furnace, in which it is heated zonewise and elongated into the solid or hollow cylinder, optical fiber preform or optical fiber. Alternatively, the starting body may be an optical fiber preform, which is then drawn into a plurality of smaller-sized preforms or an optical fiber.

Such draw methods typically require a glass handle to be attached to the upper end of the coaxial arrangement or preform in order to guide the arrangement or preform through the draw furnace. Various measures have been taken in connection with the glass handle in conventional drawing processes in order to reduce costs. For example, the glass handle is normally in the form of a solid or hollow cylinder having a smaller outer diameter than that of the quartz glass body to be drawn (i.e., the coaxial arrangement or optical fiber preform). Also, the type of glass used to form the glass handle may be of inferior quality to that of the quartz glass body to be drawn. That is, the glass used to make the glass handle typically is not used to form part of the final waveguide or optical fiber product, and can therefore be made of a cheaper material that contains more impurities and/or contaminants and has different thermal properties than the glass of the coaxial arrangement or optical fiber preform.

However, such cost-saving measures have drawbacks. In particular, when the glass handle is welded to the coaxial arrangement or optical fiber preform and the welded arrangement is then drawn, the glass at the handle end of the arrangement/preform cannot be drawn into acceptable optical fiber. Specifically, the optical fiber drawn from the glass proximate the handle typically has poor waveguide properties, such as an incorrect or distorted clad-to-core ratio, that could result in unacceptable cutoff wavelength, modefield diameter, zero dispersion wavelength, increased core eccentricity due to a radial misalignment between the core and the cladding glasses, a non-uniform outer diameter or geometry, and the like, in the drawn fiber.

Control problems are also often encountered with conventional drawing systems and methods, in that one must determine when exactly to terminate the draw to avoid drawing the distorted or "bad" end glass. The so-called "end effects" occur within a certain length of the coaxial arrangement/optical fiber preform proximate the glass handle. This length is often comparable to the length of the heat zone of the draw furnace (e.g., typically 10 to 20 cm) and typically similar to the diameter of the glass component being drawn due to the desirable efficiency of radiative heat exchange or transfer between the glass component and the draw furnace. Thus, the draw is typically terminated once this length is reached, before all of the glass of the coaxial arrangement/optical fiber preform has been drawn. The undrawn glass at the end of the coaxial arrangement/optical fiber preform attached to the handle must be discarded and the amount of wasted glass typically increases with the diameter of the glass component being drawn.

Accordingly, it would be beneficial to provide improved methods which allow for drawing of the entire quartz glass coaxial arrangement or optical preform when forming optical components, in order to avoid wasting valuable quartz glass.

JP H05-279069 A describes a quartz glass optical preform comprising a core and a surrounding cladding glass. The preform has an upper end with a flush glass handle of the same diameter as the cladding. During drawing the upper end of the preform is connected to the glass handle and its lower end is suspended by a support member. Fluorine-doped SiO₂ is used for the materials of the dummy member and of the cladding glass. Dummy member and cladding glass have an outer diameter of 30 mm.

JP 2004-175647 A describes a method of manufacturing an optical fiber preform manufactured by integrating a quartz rod serving as a core and a quartz glass tube by heat fusion. The quartz tube has a cylindrical shape. When manufacturing the optical fiber preform, the quartz tube is formed by fusing an upper dummy pipe formed at the upper end thereof and a lower dummy pipe at the lower end.

CN 102 285 758 A discloses a quartz glass body optical assembly comprising a core glass rod surrounded by a cladding glass tube. At the upper end of the optical assembly a small quartz glass rod is inserted into the bore of the cladding glass tube. Said upper end is welded to a large outer quartz tail pipe which surrounds an inner quartz small tail pipe.

JP H10-87338 A discloses a method of making optical fibre preforms by forming a neck-down region in a base material by drawing under heat in a drawing furnace and cutting/severing the elongated base material in a planar cut at several locations to produce tapered cut part ends. A dummy rod is used for attachment of the elongated body to a drawing furnace.

JP 2000 063140 A discloses heating and stretching a large optical fiber preform and then heating and melting it in the middle of the stretched portion in order to form a neck-down region. According to Example A a large-sized optical fiber preform having a diameter of 150 mm was mounted on a rotary chuck of a manufacturing apparatus, and while being rotated at a rotation speed of 10 rpm, a neck-down region part having a diameter of 60 mm was formed.

JP 2001-039721 A discloses a quartz glass body optical preform comprising a core surrounded by a cladding. For stretching and removing unevenness the preform is hold within the chucks of a glass lathe. For that purpose on both ends of the preform dummy rods are welded. The outer diameter of the dummy rods 1 is within +/- 30% of the outer diameter of the preform. The outer diameter of the preform is 60 mm.

JP 2000-256028 A teaches that for shipment purposes both ends of a preform are vertically cut. US 2014/0203430 A1 discloses a glass base elongation method comprising a trunk portion having tapered end portions. The tapered portions are cleaved at a portion where the outer diameter is approximately equal to the diameter of the elongated product, so that one of the tapered end portions includes a non-transparent glass portion tip and the other one includes a transparent glass portion tip. The transparent glass portion tip is fused together with a tip of a hanging dummy.

US 4,195.980 A discloses cutting both ends of a preform perpendicular to its longitudinal axis and grinding and polishing the cut ends. The reason for that is that a plurality of said prepared rod preforms can be arranged end to end inside a silica sleeve tube 31.

JP S-63231405 A discloses a method for connecting optical fibre base material by butting against each other cylinders having end faces which are cut perpendicular to its longitudinal axis and the grinded and polished.

### SUMMARY

The invention is based on our discovery of the root cause of the above-described end effects, which was unknown until now. Specifically, we have found that these end effects are the result of the glass at the trailing end of the coaxial arrangement/optical fiber preform (i.e., the end attached to the handle) becoming distorted during the drawing process. We have further discovered that these distortions occur in the end glass primarily because the heated inner and central portion of the glass that contains the fiber core flows axially downwardly (e.g., by gravity or externally applied drawing or holding forces) at a different rate than the heated outer cladding glass due to radially non-uniform temperature and viscosity distribution within the glass body . More particularly, we have found that, as the handle end of the coaxial arrangement/optical fiber preform approaches the heating zone of the draw furnace, the outer cladding glass is heated to a higher temperature than the inner core glass, and thus the relatively hotter outer cladding glass flows axially downwardly faster than the inner core glass. As a result, the outer cladding glass droops or slumps down further than the inner core glass, thereby distorting the glass clad-to-core ratio at the handle end and destroying the waveguide properties of the optical component drawn therefrom. In addition, such differential axial flow of glass near the handle end is frequently azimuthally asymmetric (e.g., due to the azimuthally asymmetric temperature distribution experienced by the glass body within the draw furnace) which, in turn, can cause a significant increase in the fiber core eccentricity.

We have further found that the differential axial flow of the core and cladding glasses occurs primarily because the handle and the attached trailing end of the coaxial arrangement/optical fiber preform typically have different outer diameters, thereby resulting in a radial geometric discontinuity at the handle end. This radial discontinuity, in turn, causes a radiative heat load to be generated proximate the interface of the glass handle and the coaxial arrangement/optical fiber preform and a radially non-uniform temperature and viscosity distribution for the core and cladding glasses proximate the interface.

We have also found that other factors, such as differences in the geometric shape and thermal properties of the glass handle and coaxial arrangement/optical fiber preform, can cause radially non-uniform temperature and viscosity distribution of the end glass. The non-uniform temperature distribution causes the core and cladding glasses to flow downwardly at different rates, thereby distorting and destroying the necessary relative proportions of the core and cladding glasses (commonly referred to as the clad-to-core ratio) for useful waveguide or optical fiber applications.

One embodiment of the invention is directed to a method of producing a quartz glass optical component according to claim 1.

Another embodiment of the invention relates to a method of drawing optical fibers according to claim 6.

Another embodiment of the invention relates to a system for producing a quartz glass optical component according to claim 8.

### BRIEF DESCRIPTION OF DRAWINGS

The foregoing summary, as well as the following detailed description of preferred embodiments of the invention, will be better understood when read in conjunction with the appended drawings. For the purpose of illustration, there are shown in the drawings embodiments which are preferred. It should be understood, however, that the device and method are not limited to the precise arrangements and instrumentalities shown. In the drawings:
Fig. 1 is a partial cross-sectional view of a system for producing an optical component in accordance with one embodiment of the invention;
Fig. 2A is a perspective side view of a quartz glass body used to produce an optical component in accordance with an embodiment of the invention;
Fig. 2B is a cross-sectional view of the quartz glass body shown in Fig. 2A;
Fig. 3A is a perspective side view of a glass handle used to produce an optical component in accordance with an embodiment of the invention;
Fig. 3B is a cross-sectional view of the glass handle shown in Fig. 3A;
Fig. 4 is a partial cross-sectional view of a system for producing a quartz glass body which may be drawn into an optical component in accordance with an embodiment of the invention;
Fig. 5 is a cross-sectional view of a system for producing a quartz glass body which may be drawn into an optical component in accordance with another embodiment of the invention; and
Fig. 6 is a cross-sectional view of the quartz glass body produced by the systems of Figs. 4-5.

### DETAILED DESCRIPTION

The invention relates to a system and method for producing optical fiber performs or optical fibers. It will be understood by those skilled in the art that the preforms produced from the below described system and methods may be utilized for various other purposes than for fabricating an optical fiber preform or optical fiber. More particularly, the invention relates to a method for drawing an optical fiber preform or an optical fiber while reducing or preventing waveguide distortions in the glass during the drawing process. The invention also results in improved core eccentricity and uniformity of cladding diameter in an optical fiber to be drawn from the preform.

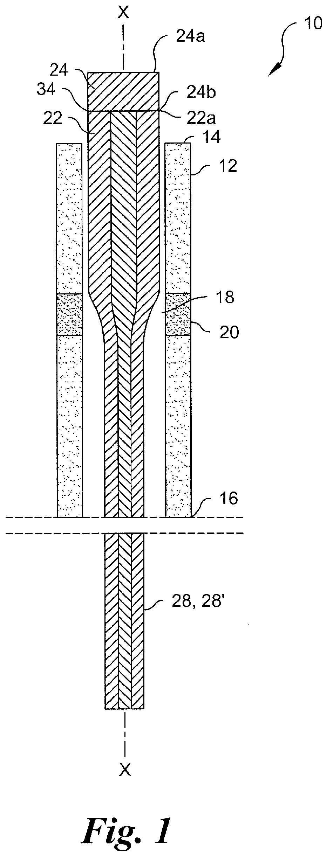

Referring to Fig. 1, there is shown a system 10 for producing an optical fiber perform or an optical fiber. The system 10 includes a vertically arranged drawing tower 12 comprising an upper open end 14, an opposing lower open end 16, and a heating zone 18 between the upper and lower ends 14, 16. The heating zone 18 can preferably be heated to temperatures of 500°C to 2,300°C, and more preferably 1,000°C to 2,300°C, and most preferably 1,500°C to 2,300°C, by a heating element 20 (see Fig. 1). More particularly, the heating element 20 is preferably of an annular configuration. The heating element 20 is preferably positioned within or around the drawing tower 12 so as to form the heating zone 18 of the drawing tower 12.

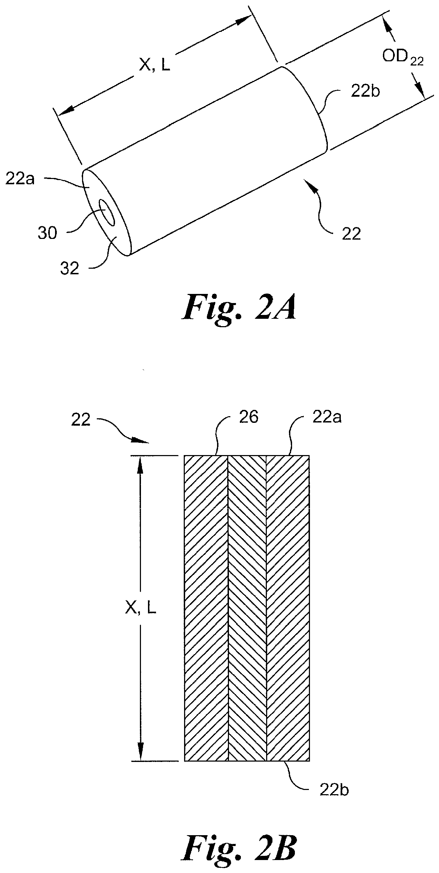

A quartz glass body 22 is guided through the drawing tower 12 by a glass handle 24 to produce optical fiber preforms or optical fibers. Referring to Figs. 2A-2B, the glass body 22 is of a cylindrical or tubular configuration. The glass body 22 has a length L which extends from a first or upper end 22a to an opposing second or lower end 22b. A longitudinal axis X extends between the opposing first and second ends 22a, 22b. The first end 22a is a square cut end. That is, the first end 22a is blunt and planar, such that the face 26 of the first end 22a extends perpendicularly to the longitudinal axis X of the glass body 22. More particularly, the end face 26 preferably extends within ± 5° of 90° with respect to the longitudinal axis X of the glass body 22. Both the first and second ends 22a, 22b of the glass body 22 are square cut ends.

The quartz glass body 22 is comprised of a core or core rod glass 30 containing the waveguiding optical fiber core and cladding glass 32 surrounding the core rod glass 30. More particularly, the core rod glass 30 is preferably formed in the geometric center of the quartz glass body 22 and extends along the length L thereof. The cladding glass 32 is preferably formed over the core rod glass 30 to radially surround the core rod glass 30 along the length L of the quartz glass body 22.

The cladding glass 32 may be pure quartz glass or a doped quartz glass with a different refractive index or composition. Preferably, however, the cladding glass 32 is pure quartz glass. The core rod glass 30 is preferably a mostly pure quartz glass having a simple step or a complex radial refractive index profile at or near the waveguiding core.

Referring to Fig. 1, the glass body 22 is passed through the drawing tower 12, where it is heated, softened and elongated to form an optical component, such as an optical fiber preform 28 or an optical fiber 28'. More particularly, the lower end 22b of the glass body 22 is preferably positioned in a stable manner at the upper open end 22 of the drawing tower 12 at the start of the draw and the glass body 22 then progresses in a downward direction through the drawing tower 12. In the drawing tower 12, the glass body 22 is heated in a zone-wise manner in the heating zone 18. A preform 28 or fiber 28' is continuously drawn out from the lower open end 16 by melt deformation and optionally stretching/elongation by gravitational or externally applied pulling or compressing forces during the draw.

For purposes of the production method, and more particularly for purposes of the progression of the glass body 22 through the drawing tower 12, the lower end 22b of the body 22 is a leading end and the upper end 22a is a trailing end. Also, it will be understood by those skilled in the art that any conventional vertically-oriented drawing apparatus may be used for formation of the optical fiber preform or the optical fiber, provided that the apparatus is equipped with a heating element.

In one embodiment, the glass body 22 is a coaxial assembly of two separate glass components. More particularly, the core rod glass 30 is in the form of a solid and cylindrical core rod and the cladding glass 32 is in the form of a hollow overclad cylinder surrounding the core rod 30 (i.e., a rod-in-cylinder assembly). In the coaxial assembly, the core rod 30 and the overclad cylinder 32 are not fused together before the furnace draw.

In one embodiment, at least one jacket (not shown) is provided in the gap between the core rod glass 30 and the cladding glass 32. The jacket is preferably made of a fluorine-doped glass, and more preferably a fluorine-doped quartz glass. However, it will be understood that the jacket need not be made of quartz glass and may of a different composition glass.

As the coaxial assembly of this embodiment of the glass body 22 progresses from the upper open end 14 of the drawing tower 12 toward the lower open end 16, the core rod 30 and the overclad cylinder 32 are heated to a predetermined temperature sufficient to cause the two glass components to soften and fuse together to form a monolithic glass body. More particularly, as successive portions of the two-piece glass body 22 approach the heating zone 18 and are heated therein, the overclad glass cylinder 32 and the core rod 30 become softened and the softened overclad glass cylinder 32 collapses on and fuses with the core rod 30. At least one, and more preferably a plurality of preforms 28, or an optical fiber 28' may then be drawn from the resulting monolithic glass body.

Preferably, the coaxial arrangement of this embodiment of the glass body 22 is heated to temperatures of 500°C to 2,300°C, and more preferably 1,000°C to 2,300°C, and most preferably 1,500°C-2,300°C. More preferably, softening and collapsing of the overclad cylinder 32 on the core rod 30 occurs at a temperature of 1,000°C to 2,200°C, and more preferably 1,300°C to 2,000°C, and most preferably 1,600°C-1,800°C. Fusing together of the softened and collapsed overclad cylinder 32 with the softened core rod 30 preferably occurs at a temperature of 1,000°C to 2,200°C, and more preferably 1,300°C to 2,200°C, and most preferably 1,600°C-2,200°C. However, it will be understood by those skilled in the art that other factors, such as glass material composition, draw speed, and throughput, also affect the temperature at which the overclad cylinder 32 will collapse on and fuse with the core rod 30.

In another embodiment, the glass body 22 is in the form of a one-piece monolithic solid quartz glass cylinder, and more preferably in the form of an optical fiber preform. That is, in one embodiment, the core rod glass 30 and the cladding glass 32 have already been fused together and drawn into a monolithic optical fiber preform. The optical fiber preform of this embodiment of the glass body 22 may be a mother preform of a relatively large diameter which is passed through the drawing tower 12 to produce a plurality of smaller-sized preforms 28. Alternatively, the optical fiber preform of this embodiment of the glass body 22 may be dimensioned to be directly drawn into an optical fiber 28'.

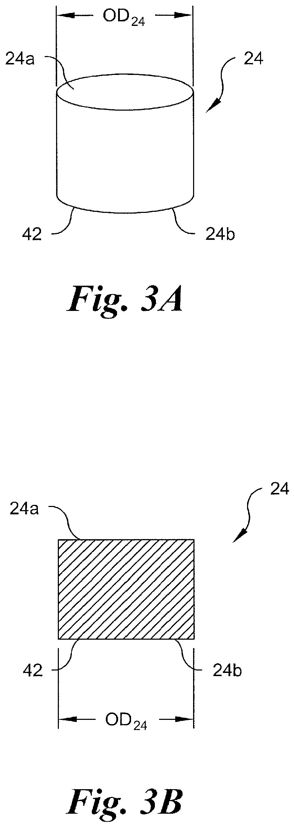

Referring to Figs. 1 and 3A-3B, the glass handle 24 is utilized to guide the glass body 22 through the drawing tower 12. Specifically, the glass handle 24 has a first trailing end 24a and an opposing second leading end 24b. The second end 24b is a square cut end. More preferably, both the first and second ends 24a, 24b of the glass handle 24 are square cut ends. The square cut second end 24b of the glass handle 24 is secured to the square cut first or upper end 22a of the glass body 22. More preferably, the square cut second end 24b of the glass handle 24 is welded to at least the cladding glass 32 of the first end 22a of the glass body 22. Alternatively, the square cut second end 24b of the glass handle 24 may be welded to the entire face 26 of the glass body 22 at the first end 22a. Since the welded ends 22a and 24b are each square cut, the respective end faces 26, 42 rest flush against each other at an interface 34.

In one embodiment not falling under the scope of the present invention, the glass handle 24 is preferably in the form of a solid or hollow cylinder having a uniform outer diameter OD₂₄ extending along a length thereof. The cylindrical glass body 22 also preferably has a uniform diameter OD₂₂ along its entire length L. In the invention. as shown in Figs. 3A-3B, the outer diameter OD₂₄ of the glass handle 24 is between 50% and 110%, and more preferably between 60% and 110%, of the outer diameter OD₂₂ of the glass body 22. More particularly, the outer diameter OD₂₄ of the square cut second end 24b of the glass handle 24 is between 50% and 110%, and more preferably between 60% and 110%, of the outer diameter OD₂₂ of the square cut first end 22a of the glass body 22. More preferably, the outer diameter OD₂₄ of the square cut second end 24b of the glass handle 24 is equal to the outer diameter OD₂₂ of the square cut first end 22a of the glass body 22.

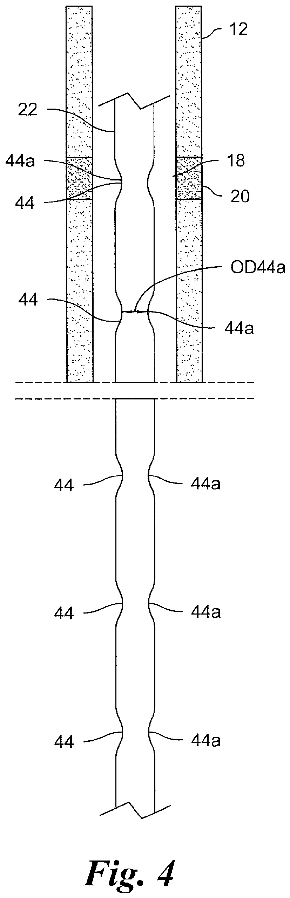

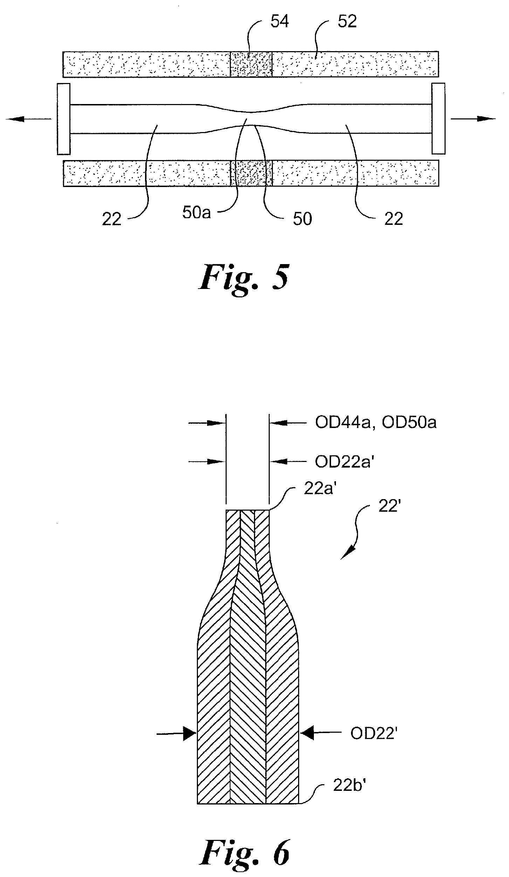

In another embodiment, the outer diameter OD₂₄ of the glass handle 24 is smaller than the initial outer diameter OD₂₂ of the glass body 22. In such an embodiment, the square cut first end 22a of the glass body 22 (i.e., the end to which the glass handle 24 is attached) is tapered to better match the outer diameter OD₂₄ of the glass handle 24, thereby forming a tapered glass body 22' (see Figs. 4-6). The outer diameter OD_{22a'} of the tapered square cut end 22a' is thus smaller than the outer diameter OD_{22'} of the second end 22b'. More particularly, as shown in Fig. 6, in the tapered glass body 22', the square cut first end 22a' is tapered, such that the outer diameter OD₂₄ of the glass handle 24 is between 50% of the outer diameter OD₂₂ₐ, of the tapered square cut end 22a' and 110% of the outer diameter OD_{22'} of the second end 22b' of the glass body 22'. More preferably, the outer diameter OD₂₄ of the glass handle 24 is preferably between 60% of the outer diameter OD₂₂ₐ, of the tapered square cut end 22a' and 110% of the outer diameter OD_{22'} of the second end 22b' of the glass body 22'. Most preferably, the outer diameter OD₂₄ of the glass handle 24 is equal to the outer diameter OD_{22a'} of the tapered square cut end 22a'. Preferably, the square cut first end 22a' of the glass body 22' is configured as a conical taper, although it will be understood that any tapered configuration may be acceptable.

Such a tapered glass body 22' may be formed by any known methods as long as the method preserves the clad-to-core ratio of the waveguide. For example, the tapered square cut end 22a' may be formed by applying a heat source to the first end 22a' until the end 22a' is tapered to the outer diameter OD_{22a'}. Examples of such heat sources include, but are not limited to, an oxyhydrogen torch, a propane torch, a plasma torch and the like.

In one embodiment, as shown in Fig. 4, the tapered glass body 22' is formed by passing a glass body 22 through the drawing furnace 12 and heating spaced-apart portions of the body 22 while simultaneously stretching or elongating the body 22. As a result, spaced-apart neck-down or tapered regions 44, each having an hourglass-like shape having two opposing conical tapered sections, are formed along the length L of the glass body 22. The outer diameter OD₄₄ₐ of the narrowest portion 44a of each neck-down region 44 is generally equal to the outer diameter OD₂₄ of the relatively smaller handle 24. The glass body 22 may then be cut at the narrowest portion 44a of each neck-down region 44, thereby forming a plurality of tapered glass bodies 22', each having a square cut first end 22a' having an outer diameter OD_{22'}.

As another example, shown in Fig. 5, the tapered glass body 22' may be formed by welding two glass bodies 22 together and then pulling the attached bodies 22 away from each other (i.e., stretching the attached bodies 22) while simultaneously heating at least one portion thereof in a furnace 52 having a heater 54. As a result, an intermediate neck-down or tapered region 50, of a similar geometry to the neck-down region 44 described above, is formed. The attached glass bodies 22 may then be cut at the narrowest portion 50a of the neck-down region 50, thereby forming a pair of tapered glass bodies 22', each having a square cut first end 22a' having an outer diameter OD_{22a'} that is generally equal to the outer diameter OD₂₄ of the square cut second end 24b of the glass handle 24. It will be understood that multiple spaced-apart portions of the attached bodies 22 may be heated to form a plurality of spaced-apart neck-down regions 50 and a plurality of tapered glass bodies 22'.

The two different types of glass bodies 22, 22' will be described herein collectively by reference solely to "the glass body 22." As such, it will be understood that the below description applies to both the glass body 22 of a uniform diameter OD₂₂ and the glass body 22' having a tapered end 22a'.

Due to the generally equal outer diameters OD₂₂ₐ and OD_{24b} of the attached square cut ends 22a, 24b, the interface 34 of the handle 24 and the glass body 22 has a generally uniform radial geometry. More particularly, the handle/body interface 34 has a uniform outer diameter with no radial discontinuity, such that as the glass handle 24 guides the glass body 22 through the draw tower 12, there is minimal thermal perturbation that arises from the scattering and absorption of non-uniform radiative heat proximate to or at the interface 34, such that there is uniform radial temperature and viscosity distribution at or proximate to the interface 34. Preferably, the non-uniform radiative heat load generated proximate the interface 34 results in a radial temperature difference of less than 200°C , and more preferably less than 100°C, and most preferably less than 50°C.

Consequently, there is a uniform radial temperature distribution proximate the interface 34, such that the core rod glass 30 and the cladding glass 32 proximate the draw handle end (i.e., the interface 34) are heated up to the same temperature at the same rate, and the heated glasses 30, 32 have generally equal viscosities and therefore generally equal axial flow rates. That is, the heated core rod glass 30 and the heated cladding glass 32 proximate the handle/body interface 34 flow in a downward direction along the longitudinal axis L₂₂ at generally equal rates, such that the glass proximate the interface 34 does not become distorted. As a result, the core rod and the cladding glasses 30, 32 remain radially aligned relative to each other, the outer cladding glass 32 has uniform outer diameter or geometry, and the cladding-to-core ratio necessary for the final waveguide or optical fiber product is maintained. More particularly, a distortion of the clad-to-core ratio proximate the interface 34 is preferably less than 5%, and more preferably less than 3%, and most preferably less than 1%.

It will be understood that there may be a slight deviation between the outer diameters OD₂₂ₐ and OD_{24b} of the attached square cut ends 22a, 24b, as long as the radial temperature difference proximate the interface 34 is less than 200°C, and more preferably less than 100°C, and most preferably less than 50°C, such that there is a radially uniform temperature and viscosity distribution proximate the interface 34. It will be understood that there may be a slight deviation between the axial flow rates of the heated core rod and cladding glasses 30, 32 proximate the draw handle end (i.e., the interface 34), as long as any radial non-uniformity in the temperature distribution in the glass proximate the interface 34 is limited as discussed above. More particularly, the axial flow rates may deviate slightly from each other, as long as any change or distortion of the clad-to-core ratio proximate the interface 34 is less than 5%, more preferably less than 3%, and most preferably less than 1% for optimal waveguide or optical fiber performance.

In one embodiment not falling under the scope of the present invention, the glass handle 24 is made of the same type of glass as the cladding glass 32 of the glass body 22. In the invention, the glass handle 24 is an optical fiber perform having the same types of core rod and cladding glasses as the core rod and cladding glasses 30, 32 of the glass body 22.

In one embodiment, the glass handle 24 is an undrawn (i.e., new or fresh) optical fiber preform and the glass body 22 is a remnant of an already drawn preform (i.e., a preform stub). More particularly, the preform stub (i.e., the glass body 22) may be formed by drawing a portion of an optical fiber preform and leaving a tapered or tipped portion of the preform undrawn which can facilitate the start of subsequent fiber draw when welded to an undrawn square cut preform (i.e., the glass handle 24). The tapered or tipped remnant portion of a drawn preform is an optical fiber preform stub, which may then serve as the glass body 22 to be welded to the square cut second end 24b of a fresh or new preform which serves as the handle 24.

In another embodiment, the glass handle 24 is a scrap preform which is a preform whose waveguide performance or optical fiber properties have been shown (in previous tests of "sister" material) to be insufficient to result in acceptable waveguide or optical fiber products.

In another embodiment not falling under the scope of the present invention, the glass handle 24 is made of a different type of glass than the glass body 22, and more preferably the glass handle 24 is made of an inferior quality glass of lower cost (e.g., a natural quartz glass having more impurities, contaminants and the like than the higher cost synthetic silica glass body 22 typically used for waveguide or optical fiber products).

In such an embodiment, even though the glass handle 24 and the glass body 22 have differing compositions, minimal to no distortions occur in the glass at the body/handle interface 34 occur because of the uniform radial geometry of the interface 34. That is, even though the different glasses of the handle 24 and body 22 have differing viscosities, thermal conductivities, heat transfer coefficients and the like, there is still no or only a minimal thermal perturbation proximate the interface 34 because the outer diameter OD₂₄ of the glass handle 24 is preferably between 50% and 110% of the outer diameter OD₂₂ of the glass body 22. As such, a radially uniform temperature distribution is maintained and the core rod glass 30 and the cladding glass 32 proximate the interface 34 have a radially uniform axial flow. In turn, the glass body 22 may be drawn up to the interface 34 to form acceptable waveguides or optical fibers products. That is, the end of the resulting waveguides or optical fibers products (i.e., the portion drawn from the end 22a of the glass body 22 attached to the handle 24) has a clad-to-core ratio, mode field diameter, core eccentricity, geometric proportions and symmetries, cutoff wavelength, zero dispersion wavelength and the like which all fall within the required tolerances for optical waveguides or fiber components.

The invention allows for increased yield from an optical component draw. The optical component draw yield is preferably between 80 to 100%, and more preferably 90 to 100%, and most preferably more than 95%. Also, as compared to conventional drawing processes, the downgrade and scrap rates are significantly reduced. The downgrade rate is preferably between 0 to 20%, and more preferably 0 to 10%, and most preferably less than 5%. The scrap rate is preferably between 0 to 10%, and more preferably 0 to 5%, and most preferably less than 1%.

The invention will now be described with reference to the following example.

### Example 1

A first cylinder assembly and a second cylinder assembly were welded together. The first and second cylinder assemblies were identical to each other. Each assembly was formed by a core rod inserted within an overclad cylinder made of dry (< 1 ppm OH) synthetic silica. Each assembly had a 200 mm outer diameter and a 43-46 mm inner diameter. The ends which were welded together were square cut ends. The welded cylinder/core-rod assembly was drawn at temperature up to 2200°C. The resulting optical preforms and fibers proximate the cylinder weld region (i.e., the interface between the first and second cylinder assemblies) had less than a 1% deviation from the design clad-to-core ratio of 3.2, as well as a less than 1% deviation from the target cutoff wavelength. Such results are indicative of a radial uniformity of better than 1% for the relative axial glass flows.

### Example 2 (reference example)

A glass handle in the form of a natural quartz collar having an outer diameter of 200 mm and an inner diameter of 126 mm was welded to the top of a 200 mm outer diameter and 46 mm inner diameter cylinder assembly. The cylinder assembly was formed by a core rods inserted within a dry (< 1 ppm OH) synthetic silica overclad cylinder. The welded ends were both square cut ends. The glass handle was then utilized to pass the cylinder assembly through a furnace to draw optical fiber preforms at a temperature up to 2200°C. The final optical fiber preforms, which included glass proximate the interface between the glass handle and the cylinder assembly, exhibited less than a 1% deviation from the design clad-to-core ratio of 3.2 and no fiber core eccentricity failures. Such results are indicative of a radial uniformity of better than 1% for the relative axial glass flows.

It will be appreciated by those skilled in the art that changes could be made to the embodiments described above without departing from the broad inventive concept thereof. It is understood, therefore, that this invention is not limited to the particular embodiments disclosed.

## Claims

1. A method of producing a quartz glass optical component, the method comprising:
providing a cylindrical quartz glass body (22) comprised of core rod glass (30) and cladding glass (32) surrounding the core rod glass (30), the cylindrical quartz glass body (22) having a first end (22a; 22a') having a first outer diameter (OD₂₂; OD_{22a'}), an opposing second end (22b), and a longitudinal axis (L₂₂) extending between the opposing first and second ends (22a; 22b);
providing a glass handle (24) in the form of an optical fiber preform having the same types of core rod and cladding glasses as the core rod and cladding glasses of the glass body, the glass handle having a first end (24a) and an opposing second end (24b) having a second outer diameter (OD₂₄);
attaching the second end (24b) of the glass handle (24) to the first end (22a; 22a') of the quartz glass body (22) to define an interface (34); and using the glass handle (24) to guide the quartz glass (22) body through a draw furnace (12) to heat the core rod glass (30) and the cladding glass (32) of the quartz glass body (22) to produce a quartz glass optical component (28; 28'), wherein
the first end (22a; 22a') of the quartz glass body (22) as well as the second end (24b) of the glass handle (24) both are square cut,
the second outer diameter (OD₂₄) is between 50% and 110% of the first outer diameter (OD₂₂; OD_{22a'}) and a distortion in a clad-to-core ratio proximate the interface (34) is less than 5%.

2. The method according to claim 1, wherein the glass handle (24) is an optical fiber preform having a square cut end and the cylindrical quartz glass body is a remnant of an already drawn optical fiber preform or wherein the glass handle (24) is in the form of a scrap optical fiber preform.

3. The method according to claim 1, wherein the cylindrical quartz glass body (22) is an optical fiber preform (28).

4. The method according to claim 1, wherein the square cut second end (24b) of the glass handle (24) is welded to the square cut first end (22a) of the cylindrical quartz glass body (22), wherein preferably the welding is performed using a process selected from the group consisting of hydrogen welding, propane welding, arc welding, plasma welding, and laser welding.

5. The method according to claim 1, wherein an outer diameter of the second end (22b) of the cylindrical quartz glass body (22) is larger than the first outer diameter (OD₂₂; OD_{22a'}) of the square cut first end (22a; 22a'), the method further comprising applying a heat source to the first end (22a; 22a') of the cylindrical quartz glass body (22) to form a tapered and square cut end (22a'), the second outer diameter (OD₂₄) of the glass handle (24) being between 50% of an outer diameter of the tapered end (22a') and 110% of the first outer diameter (OD₂₂; OD_{22a'}).

6. A method of drawing optical fibers, the method comprising:
forming a first optical fiber preform according to a method comprising
passing a quartz glass body (22) through a furnace (12) having a heating zone (18), the quartz glass body (22) having a first end (22a, 22a') and an opposing second end (22b);
forming at least one neck-down region (44) between the first and second ends (22a; 22b) of the quartz glass body (22) in the heating zone (18); and
cutting the quartz glass body (22) at a narrowest portion (44a) of the at least one neck-down region (44) to form a first optical fiber preform (22') and a second optical fiber preform, each of the first and second optical fiber preforms (22') having a tapered square cut first end (22a') and an opposing second end (22b'),
the first optical fiber preform (22') comprising core rod glass (30) and cladding glass (32) surrounding the core rod glass (30);
attaching a second end (24b) of a glass handle (24) to the tapered square cut first end (22a') of the first optical fiber preform (22') to define an interface (34), using the glass handle (24) to guide the first optical fiber preform (22') in a downward direction through the vertically-oriented draw furnace (12) to heat the core rod glass (30) and the cladding glass (32) and draw an optical fiber (28'),
wherein the tapered square cut first end (22a') of the first optical fiber preform (22') as well as the second end (24b) of the glass handle (24) both are square cut,
the glass handle is in the form of a hollow cylinder or an optical fiber preform having the same types of core rod and cladding glasses as the core rod and cladding glasses of the glass body, whereby
an outer diameter (OD₄₄ₐ) of the square cut end (24b) of the glass handle (24) being between 50% of an outer diameter (OD_{22a'}) of the tapered square cut first end (22a') of the first optical fiber preform (22') and 110% of an outer diameter of the second end (22b') of the optical fiber preform (22'), wherein a distortion in a clad-to-core ratio proximate the interface (24) is less than 5%.

7. The method according to claim 6, wherein the square cut end (24b) of the glass handle (24) is welded to the tapered square cut first end (22a') of the first optical fiber preform (22').

8. A system (10) for producing a quartz glass optical component (28; 28'), the system comprising:
a vertically arranged drawing tower (12) comprising an upper open end (14), an opposing lower open end (16), and a heating zone (18) between the upper and lower ends (14, 16), a quartz glass body (22) comprised of core rod glass (30) and cladding glass (32) surrounding the core rod glass (30), the quartz glass body (22) having a square cut first (22a; 22a') end having a first outer diameter (OD₂₂; OD_{22a'}) , an opposing second end, and a longitudinal axis extending between the opposing first and second ends; and
a glass handle (24) having a first end (24a) and an opposing second end (24b) having a second outer diameter (OD₂₄),
wherein the second end (24b) of the glass handle (24) is attached to the square cut first end (22a) of the quartz glass body to define an interface (34),
wherein the first end (22a; 22a') of the quartz glass body (22) as well as the second end (24b) of the glass handle (24) both are square cut,
the glass handle is in the form of an optical fiber preform having the same types of core rod and cladding glasses as the core rod and cladding glasses of the glass body, and
the second outer diameter (OD₂₄) is between 50% and 110% of the first outer diameter (OD₂₂; OD_{22a'}), such that when the core glass (30) and the cladding glass (32) proximate the interface (34) are heated to produce a quartz glass optical component (28; 28'), a distortion in a clad-to-core ratio proximate the interface is less than 5%.

## Patentansprüche

1. Verfahren zur Herstellung einer optischen Komponente aus Quarzglas, wobei das Verfahren umfasst:
Bereitstellen eines zylindrischen Quarzglaskörpers (22), der aus Kernstabglas (30) und Mantelglas (32), das das Kernstabglas (30) umgibt, besteht, wobei der zylindrische Quarzglaskörper (22) ein erstes Ende (22a; 22a') mit einem ersten Außendurchmesser (OD22; OD22a'), ein gegenüberliegendes zweites Ende (22b) und eine Längsachse (L22), die sich zwischen dem gegenüberliegenden ersten und zweiten Ende (22a; 22b) erstreckt, aufweist;
Bereitstellen eines Glasgriffs (24) in der Form einer optischen Faservorform mit denselben Typen von Kernstab und Mantelgläsern wie der Kernstab und die Mantelgläser des Glaskörpers, wobei der Glasgriff ein erstes Ende (24a) und ein gegenüberliegendes zweites Ende (24b) mit einem zweiten Außendurchmesser (OD24) aufweist;
Befestigen des zweiten Endes (24b) des Glasgriffs (24) an dem ersten Ende (22a; 22a') des Quarzglaskörpers (22), um eine Grenzfläche (34) zu definieren; und Verwenden des Glasgriffs (24), um den Quarzglaskörper (22) durch einen Ziehofen (12) zu führen, um das Kernstabglas (30) und das Mantelglas (32) des Quarzglaskörpers (22) zu erwärmen, um eine optische Komponente (28; 28') aus Quarzglas zu erzeugen,
wobei sowohl das erste Ende (22a; 22a') des Quarzglaskörpers (22) als auch das zweite Ende (24b) des Glasgriffs (24) rechtwinklig geschnitten sind,
der zweite Außendurchmesser (OD24) zwischen 50% und 110% des ersten Außendurchmessers (OD22; OD22a') beträgt und eine Distorsion in einem Mantel-Kern-Verhältnis in der Nähe der Schnittstelle (34) weniger als 5% beträgt.

2. Verfahren nach Anspruch 1, wobei der Glasgriff (24) eine Lichtleitfaser-Vorform mit einem rechtwinklig geschnittenen Ende ist und der zylindrische Quarzglaskörper ein Rest einer bereits gezogenen Lichtleitfaser-Vorform ist, oder wobei der Glasgriff (24) in Form einer Abfall-Lichtleitfaser-Vorform vorliegt.

3. Verfahren nach Anspruch 1, wobei der zylindrische Quarzglaskörper (22) eine Lichtleitfaservorform (28) ist.

4. Verfahren nach Anspruch 1, wobei das rechtwinkelig geschnittene zweite Ende (24b) des Glasgriffs (24) an das rechtwinkelig geschnittene erste Ende (22a) des zylindrischen Quarzglaskörpers (22) geschweißt wird, wobei das Schweißen vorzugsweise unter Verwendung eines Verfahrens durchgeführt wird, das aus der Gruppe ausgewählt ist, die aus Wasserstoffschweißen, Propanschweißen, Lichtbogenschweißen, Plasmaschweißen und Laserschweißen besteht.

5. Verfahren nach Anspruch 1, wobei ein Außendurchmesser des zweiten Endes (22b) des zylindrischen Quarzglaskörpers (22) größer ist als der erste Außendurchmesser (OD22; OD22a') des rechtwinkelig geschnittenen ersten Endes (22a; 22a'), wobei das Verfahren ferner das Beaufschlagen des ersten Endes (22a; 22a') des zylindrischen Quarzglaskörpers (22) mit einer Wärmequelle umfasst, um ein verjüngtes und rechtwinkelig geschnittenes Ende (22a') zu bilden, wobei der zweite Außendurchmesser (OD24) des Glasgriffs (24) zwischen 50 % eines Außendurchmessers des verjüngten Endes (22a') und 110 % des ersten Außendurchmessers (OD22; OD22a') liegt.

6. Verfahren zum Ziehen von optischen Fasern, wobei das Verfahren umfasst:
Bilden einer ersten Vorform für optische Fasern nach einem Verfahren, umfassend
Hindurchführen eines Quarzglaskörpers (22) durch einen Ofen (12) mit einer Heizzone (18), wobei der Quarzglaskörper (22) ein erstes Ende (22a, 22a') und ein gegenüberliegendes zweites Ende (22b) aufweist;
Bilden mindestens eines Verjüngungsbereichs (44) zwischen dem ersten und dem zweiten Ende (22a; 22b) des Quarzglaskörpers (22) in der Heizzone (18); und
Schneiden des Quarzglaskörpers (22) an einem schmalsten Abschnitt (44a) des mindestens einen Verjüngungsbereichs (44), um eine erste Lichtleitfaservorform (22') und eine zweite Lichtleitfaservorform zu bilden, wobei jede der ersten und zweiten Lichtleitfaservorformen (22') ein verjüngtes rechtwinkelig geschnittenes erstes Ende (22a') und ein gegenüberliegendes zweites Ende (22b') aufweist,
wobei die erste optische Faservorform (22') einen Kernstabglas (30) und ein Mantelglas (32), das das Kernstabglas (30) umgibt, umfasst;
Anbringen eines zweiten Endes (24b) eines Glasgriffes (24) an dem sich verjüngenden rechtwinkelig geschnittenen ersten Ende (22a') der ersten Lichtleitfaservorform (22'), um eine Grenzfläche (34) zu definieren, wobei der Glasgriff (24) verwendet wird, um die erste Lichtleitfaservorform (22') in einer Abwärtsrichtung durch den vertikal ausgerichteten Ziehofen (12) zu führen, um das Kernstabglas (30) und das Mantelglas (32) zu erwärmen und eine Lichtleitfaser (28') zu ziehen,
wobei sowohl das erste Ende (22a') der ersten Vorform (22') der optischen Faser als auch das zweite Ende (24b) des Glasgriffs (24) rechtwinkelig geschnitten sind,
und wobei der Glasgriff in Form eines Hohlzylinders oder einer Vorform für optische Fasern mit denselben Arten von Kernstab und Mantelgläsern wie der Kernstab und die Mantelgläser des Glaskörpers ausgebildet ist, wobei
ein Außendurchmesser (OD44a) des rechtwinkelig geschnittenen Endes (24b) des Glasgriffs (24) zwischen 50 % eines Außendurchmessers (OD22a') des sich verjüngenden, rechtwinkelig geschnittenen ersten Endes (22a') der ersten Lichtleitfaser-Vorform (22') und 110 % eines Außendurchmessers des zweiten Endes (22b') der Lichtleitfaser-Vorform (22') liegt, wobei eine Distorsion in einem Mantel-zu-Kern-Verhältnis in der Nähe der Grenzfläche (24) weniger als 5 % beträgt.

7. Verfahren nach Anspruch 6, bei dem das rechtwinkelig geschnittene Ende (24b) des Glasgriffs (24) mit dem konisch zulaufenden, rechtwinkelig geschnittenen ersten Ende (22a') der ersten Lichtleitfaser-Vorform (22') verschweißt wird.

8. System (10) zur Herstellung einer optischen Komponente (28; 28') aus Quarzglas, wobei das System umfasst:
einen vertikal angeordneten Ziehturm (12), der ein oberes offenes Ende (14), ein gegenüberliegendes unteres offenes Ende (16) und eine Heizzone (18) zwischen dem oberen und unteren Ende (14, 16) aufweist,
einen Quarzglaskörper (22), der aus Kernstabglas (30) und Mantelglas (32), das das Kernstabglas (30) umgibt, besteht, wobei der Quarzglaskörper (22) ein rechtwinkelig geschnittenes erstes Ende (22a; 22a') mit einem ersten Außendurchmesser (OD22; OD22a'), ein gegenüberliegendes zweites Ende und eine Längsachse, die sich zwischen dem gegenüberliegenden ersten und zweiten Ende erstreckt, aufweist; und
einen Glasgriff (24) mit einem ersten Ende (24a) und einem gegenüberliegenden zweiten Ende (24b) mit einem zweiten Außendurchmesser (OD₂₄),
wobei das zweite Ende (24b) des Glasgriffs (24) an dem rechtwinkelig geschnittenen ersten Ende (22a) des Quarzglaskörpers befestigt ist, um eine Grenzfläche (34) zu definieren,
wobei sowohl das erste Ende (22a; 22a') des Quarzglaskörpers (22) als auch das zweite Ende (24b) des Glasgriffs (24) rechtwinklig geschnitten sind,
wobei der Glasgriff in Form einer Glasfaservorform vorliegt, die die gleichen Arten von Kernstab und Mantelgläsern wie der Kernstab und die Mantelgläser des Glaskörpers aufweist, und
der zweite Außendurchmesser (OD24) zwischen 50 % und 110 % des ersten Außendurchmessers (OD22; OD22a') beträgt, so dass, wenn das Kernglas (30) und das Mantelglas (32) in der Nähe der Grenzfläche (34) erhitzt werden, um eine optische Komponente (28; 28') aus Quarzglas zu erzeugen, eine Distorsion in einem Mantel-Kern-Verhältnis in der Nähe der Grenzfläche weniger als 5 % beträgt.

## Revendications

1. Procédé de production d'un composant optique en verre de quartz, le procédé comprenant :
le fait de fournir un corps cylindrique en verre de quartz (22) composé de verre de tige de noyau (30) et de verre de gaine (32) entourant le verre de tige de noyau (30), le corps cylindrique en verre de quartz (22) ayant une première extrémité (22a ; 22a') ayant un premier diamètre externe (OD₂₂ ; OD_{22a'}), une deuxième extrémité opposée (22b), et un axe longitudinal (L₂₂) s'étendant entre les première et deuxième extrémités opposées (22a ; 22b) ;
le fait de fournir une poignée en verre (24) sous la forme d'une préforme de fibre optique ayant les mêmes types de verres de tige de noyau et de gaine que les verres de tige de noyau et de gaine du corps en verre, la poignée en verre ayant une première extrémité (24a) et une deuxième extrémité opposée (24b) ayant un second diamètre externe (OD₂₄) ;
le fait de fixer la deuxième extrémité (24b) de la poignée en verre (24) à la première extrémité (22a ; 22a') du corps en verre de quartz (22) pour définir une interface (34) ; et le fait d'utiliser la poignée en verre (24) pour guider le corps en verre de quartz (22) à travers un four d'étirage (12) pour chauffer le verre de tige de noyau (30) et le verre de gaine (32) du corps en verre de quartz (22) pour produire un composant optique en verre de quartz (28 ; 28'), dans lequel
la première extrémité (22a ; 22a') du corps en verre de quartz (22) ainsi que la deuxième extrémité (24b) de la poignée en verre (24) sont toutes deux coupées à angle droit,
le deuxième diamètre externe (OD₂₄) fait entre 50 % et 110 % du premier diamètre externe (OD₂₂ ; OD_{22a'}) et une distorsion dans un rapport de gaine-à-noyau à proximité de l'interface (34) est inférieure à 5 %.

2. Procédé selon la revendication 1, dans lequel la poignée en verre (24) est une préforme de fibre optique ayant une extrémité coupée à angle droit et le corps cylindrique en verre de quartz est un reste d'une préforme de fibre optique déjà étirée ou dans lequel la poignée en verre (24) se présente sous la forme d'une préforme de fibre optique de rebut.

3. Procédé selon la revendication 1, dans lequel le corps cylindrique en verre de quartz (22) est une préforme de fibre optique (28).

4. Procédé selon la revendication 1, dans lequel la deuxième extrémité coupée à angle droit (24b) de la poignée en verre (24) est soudée à la première extrémité coupée à angle droit (22a) du corps cylindrique en verre de quartz (22), dans lequel de préférence le soudage est effectué à l'aide d'un procédé choisi dans le groupe constitué par le soudage à l'hydrogène, le soudage au propane, le soudage à l'arc, le soudage au plasma, et le soudage au laser.

5. Procédé selon la revendication 1, dans lequel un diamètre externe de la deuxième extrémité (22b) du corps cylindrique en verre de quartz (22) est plus grand que le premier diamètre externe (OD₂₂ ; OD_{22a'}) de la première extrémité coupée à angle droit (22a ; 22a'), le procédé comprenant en outre le fait d'appliquer une source de chaleur à la première extrémité (22a ; 22a') du corps cylindrique en verre de quartz (22) pour former une extrémité conique et coupée à angle droit (22a'), le deuxième diamètre externe (OD₂₄) de la poignée en verre (24) faisant entre 50 % d'un diamètre externe de l'extrémité conique (22a') et 110 % du premier diamètre externe (OD₂₂ ; OD_{22a'}).

6. Procédé d'étirage de fibres optiques, le procédé comprenant :
le fait de former une première préforme de fibre optique selon un procédé comprenant
le fait de faire passer un corps en verre de quartz (22) dans un four (12) ayant une zone de chauffage (18), le corps en verre de quartz (22) ayant une première extrémité (22a, 22a') et une deuxième extrémité opposée (22b) ;
le fait de former au moins une région d'étranglement (44) entre les première et deuxième extrémités (22a ; 22b) du corps en verre de quartz (22) dans la zone de chauffage (18) ; et
le fait de découper le corps en verre de quartz (22) au niveau de la partie la plus étroite (44a) de l'au moins une région d'étranglement (44) pour former une première préforme de fibre optique (22') et une deuxième préforme de fibre optique, chacune des première et deuxième préformes de fibre optique (22') ayant une première extrémité conique coupée à angle droit (22a') et une deuxième extrémité opposée (22b'),
la première préforme de fibre optique (22') comprenant un verre de tige de noyau (30) et un verre de gaine (32) entourant le verre de tige de noyau (30) ;
le fait de fixer une deuxième extrémité (24b) d'une poignée en verre (24) à la première extrémité conique coupée à angle droit (22a') de la première préforme de fibre optique (22') pour définir une interface (34), le fait d'utiliser la poignée en verre (24) pour guider la première préforme de fibre optique (22') dans une direction vers le bas à travers le four d'étirage (12) orienté verticalement pour chauffer le verre de tige de noyau (30) et le verre de gaine (32) et étirer une fibre optique (28'),
dans lequel la première extrémité conique coupée à angle droit (22a') de la première préforme de fibre optique (22') ainsi que la deuxième extrémité (24b) de la poignée en verre (24) sont toutes deux coupées à angle droit,
la poignée en verre se présente sous la forme d'un cylindre creux ou d'une préforme de fibre optique comportant les mêmes types de verres de tige de noyau et de gaine que les verres de tige de noyau et de gaine du corps en verre, ce par quoi
un diamètre externe (OD₄₄ₐ) de l'extrémité coupée à angle droit (24b) de la poignée en verre (24) est compris entre 50 % d'un diamètre externe (OD_{22a'}) de la première extrémité conique coupée à angle droit (22a') de la première préforme de fibre optique (22') et 110 % d'un diamètre externe de la deuxième extrémité (22b') de la préforme de fibre optique (22'), dans lequel une distorsion dans un rapport de gaine-à-noyau à proximité de l'interface (24) est inférieure à 5 %.

7. Procédé selon la revendication 6, dans lequel l'extrémité coupée à angle droit (24b) de la poignée en verre (24) est soudée à la première extrémité conique coupée à angle droit (22a') de la première préforme de fibre optique (22').

8. Système (10) pour la production d'un composant optique en verre de quartz (28 ; 28'), le système comprenant :
une tour d'étirage (12) agencée verticalement, comprenant une extrémité supérieure ouverte (14), une extrémité inférieure ouverte opposée (16), et une zone de chauffage (18) entre les extrémités supérieure et inférieure (14, 16),
un corps en verre de quartz (22) composé de verre de tige de noyau (30) et de verre de gaine (32) entourant le verre de tige de noyau (30), le corps en verre de quartz (22) ayant une première extrémité coupée à angle droit (22a ; 22a') ayant un premier diamètre externe (OD₂₂ ; OD_{22a'}), une deuxième extrémité opposée, et un axe longitudinal s'étendant entre les première et deuxième extrémités opposées ; et
une poignée en verre (24) ayant une première extrémité (24a) et une deuxième extrémité opposée (24b) ayant un deuxième diamètre externe (OD₂₄),
dans lequel la deuxième extrémité (24b) de la poignée en verre (24) est fixée à la première extrémité coupée à angle droit (22a) du corps en verre de quartz pour définir une interface (34),
dans lequel la première extrémité (22a ; 22a') du corps en verre de quartz (22) ainsi que la deuxième extrémité (24b) de la poignée en verre (24) sont toutes deux coupées à angle droit,
la poignée en verre se présente sous la forme d'une préforme de fibre optique comportant les mêmes types de verres de tige de noyau et de gaine que les verres de tige de noyau et de gaine du corps en verre, et
le deuxième diamètre externe (OD₂₄) fait entre 50 % et 110 % du premier diamètre externe (OD₂₂ ; OD_{22a'}), de sorte que lorsque le verre de noyau (30) et le verre de gaine (32) à proximité de l'interface (34) sont chauffés pour produire un composant optique en verre de quartz (28 ; 28'), une distorsion dans un rapport de gaine-à-noyau à proximité de l'interface est inférieure à 5 %.
